(19) Europäisches Patentamt
European Patent Office
Office européen des brevets

(11) **EP 4 448 364 B1**

(12) **EUROPÄISCHE PATENTSCHRIFT**

(45) Veröffentlichungstag und Bekanntmachung des Hinweises auf die Patenterteilung:
**01.04.2026   Patentblatt 2026/14**

(21) Anmeldenummer: **22822322.8**

(22) Anmeldetag: **23.11.2022**

(51) Internationale Patentklassifikation (IPC):
**B60D 1/62** *(2006.01)*      **B60W 40/06** *(2012.01)*
**G01L 5/16** *(2020.01)*      **B60D 1/24** *(2006.01)*

(52) Gemeinsame Patentklassifikation (CPC):
**B60W 40/06; B60D 1/248; B60D 1/62; G01L 5/16;**
B60W 2300/14; B60W 2520/00

(86) Internationale Anmeldenummer:
**PCT/EP2022/082991**

(87) Internationale Veröffentlichungsnummer:
**WO 2023/110343 (22.06.2023 Gazette 2023/25)**

(54) **VERFAHREN ZUR TRAKTIONSSTEUERUNG EINES FAHRZEUGS ODER EINES FAHRZEUGGESPANNS**

METHOD FOR TRACTION CONTROL OF A VEHICLE OR COUPLING OF VEHICLES

PROCÉDÉ DE COMMANDE DE LA TRACTION D'UN VÉHICULE OU D'UN ATTELAGE DE VÉHICULES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **17.12.2021   DE 102021133758**

(43) Veröffentlichungstag der Anmeldung:
**23.10.2024   Patentblatt 2024/43**

(73) Patentinhaber: **ZF CV Systems Global GmbH**
**3006 Bern (CH)**

(72) Erfinder:
• **BRÜTT, Mirko**
  **31832 Springe (DE)**
• **PFEFFERKORN, Daniel**
  **30159 Hannover (DE)**
• **SPREMBERG, Jan**
  **30974 Wennigsen (DE)**
• **WOLF, Thomas**
  **30890 Barsinghausen (DE)**

(74) Vertreter: **ZF Friedrichshafen AG**
**Gewerblicher Rechtsschutz**
**Löwentalerstraße 20**
**88046 Friedrichshafen (DE)**

(56) Entgegenhaltungen:
EP-A1- 2 394 889          EP-A2- 3 553 486
DE-A1- 102020 106 757     US-A1- 2016 297 411
US-A1- 2020 102 009

**Beschreibung**

Die Erfindung betrifft ein Verfahren zur Traktionssteuerung eines Fahrzeuggespanns. Das Fahrzeuggespann umfasst ein Zugfahrzeug sowie wenigstens ein an dieses angekoppeltes Anhängefahrzeug. Bei dem Zugfahrzeug handelt es sich um ein Radfahrzeug. Das Zugfahrzeug ist mit einer an einem Koppelelement einer Anhängevorrichtung angeordneten Sensoreinrichtung versehen, wobei mittels der Sensoreinrichtung in allen Fahrzeugrichtungen jeweils eine von einem Gegenkoppelelement des Anhängefahrzeugs auf das Koppelelement des Zugfahrzeugs übertragene Koppelkraft gemessen und als Kraftsignal ausgegeben wird, wobei aus diesen Kraftsignalen in einer an die Sensoreinrichtung angeschlossenen Auswertungseinheit die in der jeweiligen Fahrzeugrichtung wirksame Koppelkraft bestimmt und an ein elektronisches Steuergerät des Zugfahrzeugs übertragen werden, und wobei die Traktion des Zugfahrzeugs mittels des Steuergeräts an die Eigenschaften des befahrenen Untergrunds angepasst wird.

Bei dem Zugfahrzeug der hier betrachteten Fahrzeuggespanne handelt es sich bevorzugt um eine Zugmaschine, wie beispielsweise einen Traktor, die für den Einsatz in der Land- und Forstwirtschaft vorgesehen ist und jeweils am Fahrzeugheck oder an der Fahrzeugfront mit einem Koppelelement in Form einer Anhängekupplung, wie einer Kugelkopfkupplung oder Maul-Bolzenkupplung, versehen ist. Bei dem zugeordneten Anhängefahrzeug kann es sich um einen Starrdeichselanhänger, einen Zentralachsanhänger oder ein Arbeitsgerät handeln, der beziehungsweise das mit einem an einer starren Deichsel oder Aufhängung angeordneten Gegenkoppelelement, wie einer Kupplungsschale oder einer Zugöse, versehen ist. Ebenso kann es sich bei einem Zugfahrzeug der hier betrachteten Fahrzeuggespanne um eine in der Land- und Forstwirtschaft eingesetzte Sattelzugmaschine, wie einen Agrotruck, mit einer Sattelkupplung als Koppelelement, und bei dem zugeordneten Anhängefahrzeug um einen Sattelauflieger mit einer mit einem Königszapfen versehenen Stützplatte als Gegenkoppelelement handeln.

Bei einem Fahrzeuggespann der beschriebenen Art wird vorausgesetzt, dass das Zugfahrzeug an dem Koppelelement seiner Anhängevorrichtung mit einer Sensoreinrichtung versehen ist, mittels der in allen drei Fahrzeugrichtungen x, y, z jeweils eine von einem Gegenkoppelelement des Anhängefahrzeugs auf das Koppelelement des Zugfahrzeugs übertragene Koppelkraft $F_X$, $F_Y$, $F_Z$ oder in entgegengesetzter Richtung übertragene Koppelkraft $F_X$, $-F_Y$, $-F_Z$ als Kraftsignal erfasst werden kann.

In der DE 10 2018 106 856 A1 ist eine derartige Sensoreinrichtung einer Anhängevorrichtung beschrieben, welche mehrere jeweils an Stegen einer Messplatte befestigte Sensorelemente aufweist. Die Stege der Messplatte werden unter Belastung der Anhängevorrichtung elastisch verformt. Bei den Sensorelementen kann es sich um Wägezellen, Dehnungsmessstreifen oder SAW-Elemente (SAW = Surface-Acoustic-Wave) handeln. Bei einem Traktor ist die Messplatte bevorzugt zwischen einer fahrzeugfesten Anschraubplatte und einem Anhängebock angeordnet, an dem das jeweilige Koppelelement in Form einer Maul-Bolzenkupplung oder einer Kugelkopfkupplung befestigt ist. Mittels der Sensorelemente der Messplatte können die übertragenen Kräfte und Momente in allen beziehungsweise um alle drei Fahrzeugrichtungen x, y, z erfasst werden.

Aus der DE 10 2019 124 281 A1 ist eine Sattelkupplung einer Sattelzugmaschine mit einer Sensoreinrichtung zur Erfassung der von einem angekoppelten Sattelauflieger über die Sattelkupplung auf die Sattelzugmaschine übertragenen Kräfte bekannt. Die Sattelkupplung weist einen am Fahrzeugrahmen befestigbaren Lagerbock auf, an dem eine Kupplungsplatte um eine horizontale Querachse schwenkbar gelagert ist. Hierzu weist der Lagerbock zwei seitlich angeordnete Stege mit jeweils einem Lagerbockauge auf, in die jeweils ein über ein Spannelement und einen Lagereinsatz mit der Kupplungsplatte verbundenes Dämpfungselement eingreift. Gemäß einer ersten Ausführungsform der Sensoreinrichtung sind Sensoren, bei denen es sich um Dehnungsmessstreifen oder Piezoelemente handeln kann, an einem Zwischenelement angeordnet, welches zwischen dem Dämpfungselement und dem Lagereinsatz angeordnet ist und bei einer Belastung durch einen angekoppelten Sattelauflieger elastisch verformt wird. Gemäß einer zweiten Ausführungsform der Sensoreinrichtung sind die Sensoren an dem Lagereinsatz angeordnet, welcher bei einer Belastung durch einen angekoppelten Sattelauflieger elastisch verformt wird.

US 2020 / 102 009 A1 zeigt ein Verfahren und eine Einrichtung, die eine Rücksetzposition eines Fahrzeugs zum Zu-Wasser-Lassen und Aufladen eines Boots unter Verwendung einer Anhängerkupplungslast bestimmen. Eine beispielhafte Einrichtung beinhaltet einen Datenanalysator, um auf Grundlage einer Anhängerkupplungslast eines Fahrzeugs, das an einen Anhänger gekoppelt ist, eine Rücksetzposition des Fahrzeugs, um ein Boot zu Wasser zu lassen, zu bestimmen, an der ein an den Anhänger gekoppeltes Boot auf einem Gewässer schwimmt, und einen Anweisungsgenerator, um ein Bremssystem des Fahrzeugs anzuweisen, das Fahrzeug an der Rücksetzposition des Fahrzeugs anzuhalten, um das Boot zu Wasser zu lassen. Ein beispielhaftes Verfahren beinhaltet Bestimmen, auf Grundlage einer Anhängerkupplungslast eines Fahrzeugs, das an einen Anhänger gekoppelt ist, einer Rücksetzposition des Fahrzeugs, um ein Boot zu Wasser zu lassen, an der ein an den Anhänger gekoppeltes Boot auf einem Gewässer schwimmt, und Anweisen eines Bremssystems des Fahrzeugs, das Fahrzeug an der Rücksetzposition des Fahrzeugs anzuhalten, um das Boot zu Wasser zu lassen.

Ein Fahrzeuggespann, welches in der Land- und Forstwirtschaft eingesetzt wird, fährt seine Einsatzorte üblicherweise über befestigte Straßen und Wege von einem Hof oder einem Fahrzeugdepot aus an. Dabei sind die Reifenluftdrücke der Radreifen des Zugfahrzeugs und des Anhängefahrzeugs relativ hoch eingestellt, damit das Fahrzeuggespann sichere Fahreigenschaften und einen möglichst geringen Kraftstoffverbrauch aufweist. Zu diesem Zweck sind auch, sofern vorhanden, an- und abkoppelbare Antriebsachsen abgekoppelt und, sofern das Anhängefahrzeug nicht schwer beladen ist. Zudem sind anhebbare und absenkbare Liftachsen angehoben sowie die Luftfedern nichtangetriebener luftgefederter Fahrzeugachsen entlüftet. Beim Verlassen einer befestigten Straße oder eines befestigten Weges nehmen der Rollwiderstand des Fahrzeuggespanns aufgrund des weichen oder lockeren und gegebenenfalls bewachsenen Acker-, Wiesen- oder Waldbodens deutlich zu und die Traktion des Zugfahrzeugs deutlich ab, welches zur Erhöhung des Kraftstoffverbrauchs des Zugfahrzeugs führt und die Gefahr des Festfahrens des Fahrzeuggespanns mit sich birgt. Abhängig von der technischen Ausstattung des Zugfahrzeugs und des Anhängefahrzeugs können jedoch verschiedene Maßnahmen zur Erhöhung der Traktion des Zugfahrzeugs durchgeführt werden, durch welche der Rollwiderstand des Fahrzeuggespanns verringert und die Traktion des Zugfahrzeugs erhöht werden, wodurch der Kraftstoffverbrauch des Zugfahrzeugs gesenkt sowie ein Festfahren des Fahrzeuggespanns verhindert werden kann. Die Maßnahmen zur Erhöhung der Traktion können beim Verlassen befestigter Straßen und Wege von dem Fahrer des Zugfahrzeugs manuell durchgeführt werden oder in Verbindung mit einer Ermittlung des befahrenen Untergrundes automatisiert erfolgen.

Eine bekannte Maßnahme zur Erhöhung der Traktion eines Zugfahrzeugs im Offroad-Einsatz ist das Zuschalten einer nicht permanent angetriebenen Antriebsachse des Zugfahrzeugs, sofern dieses mit einem zuschaltbaren Allradantrieb ausgerüstet ist, und/oder das Zuschalten einer über den Nebenabtrieb des Zugfahrzeugs antreibbaren Antriebsachse des Anhängefahrzeugs, sofern dieses als ein Triebachsanhänger ausgeführt ist.

In der DE 10 2007 028 277 A1 ist ein Kraftfahrzeug mit einem zuschaltbaren Allradantrieb und einem Antriebsschlupfregelsystem beschrieben. Ein zugeordnetes Steuerungsverfahren sieht vor, dass ein durchdrehendes Antriebsrad einer permanent angetriebenen Antriebsachse abgebremst wird, wenn dessen Antriebsschlupfwert einen ersten Schlupfgrenzwert überschreitet, und dass eine zuschaltbare Antriebsachse zugeschaltet wird, wenn der Antriebsschlupfwert des durchdrehenden Antriebsrades danach einen zweiten Schlupfgrenzwert überschreitet.

Aus der DE 10 2016 208 792 A1 ist ein Verfahren zur Steuerung einer Allradkupplung eines Kraftfahrzeugs mit zuschaltbarem Allradantrieb bekannt. Das Verfahren sieht vor, dass mittels eines Satelliten-Navigationssystems und einer digitalen Straßenkarte die unmittelbar vor dem Kraftfahrzeug liegende Fahrstrecke ermittelt und eine zuschaltbare Antriebsachse zugeschaltet wird, wenn auf der vorausliegenden Fahrstrecke eine erhöhte Schlupfgefahr besteht und die Allradkupplung daher geschlossen sein sollte.

Eine weitere bekannte Maßnahme zur Erhöhung der Traktion eines Zugfahrzeugs besteht darin, eine benachbart zu der Antriebsachse des Zugfahrzeugs angeordnete nichtangetriebene Fahrzeugachse anzuheben, wenn diese als eine Liftachse ausgebildet ist, oder deren Federbälge zu entlüften, wenn diese luftgefedert ist. Durch diese Maßnahmen werden jeweils die Achslast und damit die Traktion der Antriebsachse des Zugfahrzeugs erhöht. Dieselbe Wirkung kann auch dadurch erzielt werden, dass eine Fahrzeugachse des Anhängefahrzeugs angehoben wird, sofern diese als eine Liftachse ausgebildet ist, oder dass deren Federbälge entlüftet werden, wenn diese luftgefedert ist. Durch diese Maßnahmen wird die von dem Anhängefahrzeug auf das Koppelelement des Zugfahrzeugs übertragene Stützlast und damit die Achslast der üblicherweise nahe am Koppelelement angeordneten Antriebsachse des Zugfahrzeugs erhöht.

Aus der DE 10 2008 054 044 A1 ist ein Verfahren zur Steuerung einer Liftachse an einem Sattelauflieger eines Sattelzuges bekannt. In einem Anfahrhilfemodus wird die Liftachse des Sattelaufliegers angehoben, um die von der Sattelplatte des Sattelaufliegers auf die Sattelkupplung der Sattelzugmaschine übertragene Stützlast und damit die Achslast sowie die Traktion der Antriebsachse der Sattelzugmaschine zu erhöhen. Dabei werden die maximal zulässigen Achslasten der übrigen Fahrzeugachsen des Sattelaufliegers beim Anfahren auf befestigtem Untergrund nicht überschritten, können jedoch beim Anfahren im Gelände überschritten werden.

Ein Verfahren zur Anfahrhilfesteuerung eines Sattelzuges gemäß der DE 10 2004 010 561 A1 sieht vor, dass die Federbälge einer luftgefederten Fahrzeugachse des Sattelaufliegers entlüftet werden, um die von der Sattelplatte des Sattelaufliegers auf die Sattelkupplung der Sattelzugmaschine übertragene Stützlast und damit die Achslast sowie die Traktion der Antriebsachse der Sattelzugmaschine zu erhöhen. Falls die Sattelzugmaschine eine entsprechend entlastbare Fahrzeugachse aufweist, wird diese zuerst durch die Entlüftung ihrer Federbälge entlastet, bevor die Fahrzeugachse des Sattelaufliegers durch die Entlüftung ihrer Federbälge entlastet wird.

Auch kann zur Senkung des Rollwiderstands des Fahrzeuggespanns und zur Erhöhung der Traktion des Zugfahrzeugs der Reifenluftdruck der Fahrzeugräder des Zugfahrzeugs und des Anhängefahrzeugs abgesenkt werden, sofern diese jeweils mit einer Reifendruckregulierungsanlage ausgerüstet sind. Durch die Absenkung des Reifenluftdruckes wird die Aufstandsfläche der Radreifen vergrößert, so dass die Fahrzeugräder weniger stark in den Boden einsinken, wodurch der Rollwiderstand des Fahrzeuggespanns reduziert und die Traktion des Zugfahrzeugs erhöht wird. Als positiver Nebeneffekt wird durch den geringeren Bodendruck der Fahrzeugräder der Acker-, Wiesen- oder Waldboden weniger stark verdichtet.

In der DE 20 2011 051 292 U1 ist ein Verfahren zur Steuerung einer Reifendruckregelanlage eines Fahrzeugs oder eines Fahrzeuggespanns beschrieben, bei dem mittels eines Satelliten-Navigationssystems und einer digitalen Straßenkarte ermittelt wird, ob sich das Fahrzeug oder Fahrzeuggespann gerade auf einer befestigten Straße oder im Gelände befindet. Entsprechend der aktuellen Fahrposition wird die Reifendruckregelanlage entweder in einem Straßenmodus mit höheren Reifenluftdrücken oder in einem Geländemodus mit niedrigeren Reifenluftdrücken betrieben.

Weiter ist aus der DE 10 2019 210 325 A1 ein Verfahren zur Steuerung einer Reifendruckregelanlage eines Fahrzeuggespanns bekannt, bei dem anhand des Betriebszustands eines an eine Zugmaschine angekoppelten Arbeitsgerätes erkannt wird, ob sich das Fahrzeuggespann gerade auf einer befestigten Straße oder im Gelände befindet. Wenn es sich bei dem angekoppelten Arbeitsgerät beispielsweise um eine Feldspritze mit einem seitlich aus- und einfahrbaren Spritzgestänge handelt, wird bei ausgefahrenem Spritzgestänge davon ausgegangen, dass sich das Fahrzeuggespann auf einem Acker befindet, und die Reifenluftdrücke der Fahrzeugreifen entsprechend abgesenkt. Wenn das Spritzgestänge danach wieder eingefahren ist, wird davon ausgegangen, dass das Fahrzeuggespann auf einen befestigten Weg fährt, und die Reifenluftdrücke der Fahrzeugreifen entsprechend erhöht.

Zudem besteht gemäß der DE 697 18 290 T2 die Möglichkeit, die Motorsteuerung des Antriebsmotors und die Getriebesteuerung des Fahrgetriebes eines Zugfahrzeugs auf Kennlinien umzuschalten, die für den Straßeneinsatz oder für den Geländeeinsatz vorgesehen sind.

Da mit den bekannten Verfahren zur Traktionssteuerung eines Fahrzeugs beziehungsweise Fahrzeuggespanns der befahrene Untergrund gar nicht oder nur indirekt und damit relativ ungenau bestimmt wird, liegt der Erfindung die Aufgabe zugrunde, ein Verfahren zur Traktionssteuerung eines Fahrzeuggespanns der eingangs genannten Art anzugeben, mit dem die Art oder die Eigenschaften des befahrenen Untergrunds direkter als bisher bestimmt und die Traktion des Fahrzeugs beziehungsweise des Zugfahrzeugs genauer an diesen Untergrund angepasst werden kann.

Die Lösung dieser Aufgabe wird mit einem Verfahren erreicht, welches die Merkmale des Anspruchs 1 aufweist. Vorteilhafte Weiterbildungen dieses Verfahrens sind in den abhängigen Ansprüchen definiert.

Demnach betrifft die Erfindung zunächst ein Verfahren zur Traktionssteuerung eines Fahrzeuggespanns, welches ein Zugfahrzeug sowie wenigstens ein an dieses angekoppeltes Anhängefahrzeug umfasst, wobei das Zugfahrzeug mit einer an einem Koppelelement einer Anhängevorrichtung angeordneten Sensoreinrichtung versehen ist, wobei mittels der Sensoreinrichtung in allen Fahrzeugrichtungen x, y, z jeweils eine von einem Gegenkoppelelement des Anhängefahrzeugs auf das Koppelelement des Zugfahrzeugs übertragene Koppelkraft $F_X$, $F_Y$, $F_Z$ gemessen und als Kraftsignal ausgegeben wird, wobei aus diesen Kraftsignalen in einer an die Sensoreinrichtung angeschlossenen Auswertungseinheit die in der jeweiligen Fahrzeugrichtung x, y, z wirksame Koppelkraft $F_X$, $F_Y$, $F_Z$ bestimmt und an ein elektronisches Steuergerät des Zugfahrzeugs übertragen wird, und wobei die Traktion des Zugfahrzeugs mittels des Steuergeräts an die Eigenschaften des befahrenen Untergrunds angepasst wird.

Zur Lösung der gestellten Aufgabe ist bei diesem Verfahren vorgesehen, dass Eigenschaften des befahrenen Untergrunds anhand der Dynamik der Koppelkräfte $F_X$, $F_Y$, $F_Z$ bestimmt werden, und zwar derart, dass in der Auswertungseinheit aus aufeinanderfolgenden Sequenzen der Koppelkräfte $F_X$, $F_Y$, $F_Z$ jeweils die dynamischen Anteile herausgefiltert werden, dass aus diesen dynamischen Anteilen der Koppelkräfte $F_X$, $F_Y$, $F_Z$ ein die Dynamik der Koppelkräfte $F_X$, $F_Y$, $F_Z$ kennzeichnender Kennwert $K_{Dyn}$ bestimmt und an das Steuergerät übertragen wird, dass in dem Steuergerät der Kennwert $K_{Dyn}$ mit einem abgespeicherten Grenzwert $K_{Dyn\_Gr}$ verglichen wird, und dass mindestens eine Maßnahme zur Erhöhung der Traktion des Zugfahrzeugs durchgeführt wird, wenn der Kennwert $K_{Dyn}$ den Grenzwert $K_{Dyn\_Gr}$ überschritten hat ($K_{Dyn} > K_{Dyn\_Gr}$), und dass die mindestens eine Maßnahme zur Erhöhung der Traktion rückgängig gemacht wird, wenn der Kennwert $K_{Dyn}$ den Grenzwert $K_{Dyn\_Gr}$ wieder unterschritten hat ($K_{Dyn} < K_{Dyn\_Gr}$).

Bei dem erfindungsgemäßen Verfahren wird davon ausgegangen, dass die von dem Anhängefahrzeug auf das Koppelelement des Zugfahrzeugs übertragenen Koppelkräfte $F_X$, $F_Y$, $F_Z$ bei einer Geländefahrt aufgrund des unebenen Untergrundes wesentlich größere Schwankungen und Schwingungen aufweisen als dies bei einer Fahrt auf befestigten Straßen oder Wegen aufgrund der dort relativ ebenen Fahrbahndecke der Fall ist. Somit kann anhand der Dynamik der Koppelkräfte $F_X$, $F_Y$, $F_Z$ unmittelbar und relativ genau die Beschaffenheit des von dem Fahrzeuggespann befahrenen Untergrundes bestimmt und zwischen einer Straßenfahrt und einer Geländefahrt unterschieden werden.

Das Verfahren gemäß der Erfindung ist aber auch an einem als Radfahrzeug ausgebildeten Solo-Fahrzeug vorteilhaft betreibbar. Ein solches Solo-Fahrzeug wird entweder grundsätzlich oder nur bedarfsweise ohne ein angekoppeltes Anhängefahrzeug betrieben. Ein Solo-Fahrzeug kann heckseitig über eine Anhängevorrichtung beispielsweise mit einem landwirtschaftlichen oder forstwirtschaftlichen Arbeitswerkzeug oder mit einer landwirtschaftlichen oder forstwirtschaftlichen Arbeitsmaschine verbunden werden oder permanent verbunden sein. Diese Arbeitswerkzeuge oder Arbeitsmaschinen können gemäß einer Ausführungsform kein eigenes Fahrwerk aufweisen, sodass diese in ihrer Nichtbetätigungsstellung vom Boden abgehoben sind.

Auch solche an das Fahrzeug angekoppelten landwirtschaftlichen oder forstwirtschaftlichen Arbeitswerkzeuge oder landwirtschaftlichen oder forstwirtschaftlichen Arbeitsmaschinen erzeugen an der Anhängevorrichtung des Fahrzeugs sowohl in deren Betätigungsstellung als auch in deren Nichtbetätigungsstellung Kräfte in allen drei Raumrichtungen, welche mittels der erwähnten Sensoreinrichtung messbar sind. Die so ermittelten Messwerte können ebenfalls zur Bestimmung der Eigenschaften des von dem Fahrzeug gerade befahrenen Untergrundes oder Fahrweges genutzt werden, sodass in Kenntnis des jeweiligen Untergrundes Maßnahmen am Fahrzeug durchführbar sind, mit denen die Traktion des Fahrzeugs optimierbar ist.

Die Erfindung ist demnach auch für den Betrieb solcher Solo-Fahrzeuge vorteilhaft. Nicht Gegenstand der vorliegenden Erfindung ist ein Verfahren zur Traktionssteuerung eines Fahrzeugs, welches eine Anhängevorrichtung mit einem Koppelelement zum Befestigen eines Gegenkoppelelements eines landwirtschaftlichen oder forstwirtschaftlichen Arbeitsgeräts oder einer landwirtschaftlichen oder forstwirtschaftlichen Arbeitsmaschine oder eines anderen Gegenstandes aufweist, wobei das Koppelelement der Anhängevorrichtung des Fahrzeugs mit einer Sensoreinrichtung verbunden ist, mittels welcher in allen Fahrzeugrichtungen x, y, z jeweils eine von dem Gegenkoppelelement auf das Koppelelement der Anhängevorrichtung des Fahrzeugs übertragene Koppelkraft $F_X$, $F_Y$, Fz gemessen und als Kraftsignal ausgegeben wird, wobei aus diesen Kraftsignalen in einer an die Sensoreinrichtung angeschlossenen Auswertungseinheit die in der jeweiligen Fahrzeugrichtung x, y, z wirksame Koppelkraft $F_X$, $F_Y$, Fz bestimmt sowie an ein elektronisches Steuergerät des Fahrzeugs übertragen wird, und wobei die Traktion des Fahrzeugs mittels des Steuergeräts an die Eigenschaften des Untergrunds angepasst wird.

Dieses Verfahren ist dadurch gekennzeichnet, dass Eigenschaften des befahrenen Untergrunds anhand der Dynamik der Koppelkräfte $F_X$, $F_Y$, Fz bestimmt werden, und zwar derart, dass in der Auswertungseinheit aus aufeinanderfolgenden Sequenzen der Koppelkräfte $F_X$, $F_Y$, $F_Z$ jeweils die dynamischen Anteile herausgefiltert werden, dass aus diesen dynamischen Anteilen der Koppelkräfte $F_X$, $F_Y$, Fz ein die Dynamik der Koppelkräfte $F_X$, $F_Y$, $F_Z$ kennzeichnender Kennwert $K_{Dyn}$ bestimmt und an das Steuergerät übertragen wird, dass in dem Steuergerät der Kennwert $K_{Dyn}$ mit einem abgespeicherten Grenzwert $K_{Dyn\_Gr}$ verglichen wird, dass mindestens eine Maßnahme zur Erhöhung der Traktion des Fahrzeugs durchgeführt wird, wenn der Kennwert $K_{Dyn}$ den Grenzwert $K_{Dyn\_Gr}$ überschritten hat ($K_{Dyn} > K_{Dyn\_Gr}$), und dass die mindestens eine Maßnahme zur Erhöhung der Traktion rückgängig gemacht wird, wenn der Kennwert $K_{Dyn}$ den Grenzwert $K_{Dyn\_Gr}$ wieder unterschritten hat

$$(K_{Dyn} < K_{Dyn\_Gr}).$$

Erkennbar sind die kennzeichnenden Merkmale des für das Solo-Fahrzeug nutzbaren Verfahrens die gleichen wie die kennzeichnenden Merkmale des Verfahrens für einen Fahrzeugzug. Daher ergeben sich auch die gleichen, oben geschilderten Vorteile.

Das zuletzt geschilderte Verfahren kann für den Betrieb eines Radfahrzeugs demnach auch dann vorteilhaft genutzt werden, wenn an dem Fahrzeug kein Anhängefahrzeug und auch kein Arbeitswerkzeug oder keine Arbeitsmaschine angekoppelt ist. In diesem Fall ist vorgesehen, dass vor Fahrtbeginn des Fahrzeugs an dem Koppelelement der Anhängevorrichtung ein Gegenkoppelelement einer gesonderten Koppelmasse befestigt wird. Diese Koppelmasse übernimmt die verfahrensbezogene Funktion eines landwirtschaftlichen oder forstwirtschaftlichen Arbeitsgeräts oder einer solchen angekoppelten Arbeitsmaschine, denn bei einer Fahrt des Fahrzeugs wird diese gesonderte Koppelmasse, angeregt durch die Bewegungen des Fahrzeugs, und unter Einwirkung der Massenträgheit in allen drei Raumrichtungen geringfügig schwingend bewegt. Diese Bewegungen erzeugen die mehrfach erwähnten Kräfte an dem Koppelelement der Anhängevorrichtung des Fahrzeugs, welche von der Sensoreinrichtung gemessen, anschließend in diesbezügliche Messwerte umgewandelt und zur Traktionssteuerung verwendet werden.

Gemäß einer anderen Verfahrensvariante kann vorgesehen sein, dass das Verfahren ohne ein an dem Koppelelement der Anhängevorrichtung des Fahrzeugs angekoppeltes Anhängefahrzeug, ohne ein angekoppeltes landwirtschaftliches oder forstwirtschaftliches Arbeitswerkzeug beziehungsweise ohne eine solche Arbeitsmaschine, sowie ohne eine angekoppelte Koppelmasse durchgeführt wird, wobei die von der Sensoreinrichtung gemessenen Koppelkräfte $F_X$, $F_Y$, Fz alleine von der Masse des Koppelelements der Anhängevorrichtung des Fahrzeugs erzeugt werden.

Demnach reicht es für die Durchführung des Verfahrens aus, wenn das Fahrzeug nur mit einer Anhängevorrichtung ausgestattet ist, deren Koppelelement über die geschilderte Sensoreinrichtung mit der tragenden Struktur des Fahrzeugs verbunden ist. Hier ist es alleine die Masse der Koppelvorrichtung der Anhängevorrichtung des Fahrzeugs, also beispielsweise ein Kupplungsmaul samt Verriegelungsmittel oder ein Kupplungshaken samt Kupplungskugel, deren Masse begrenzt schwingungsfähig über die Sensoreinrichtung mit der tragenden Struktur des Fahrzeugs verbunden ist. Erkennbar erfordert die Durchführung des erfindungsgemäßen Verfahrens an einem derart ausgestatteten Fahrzeug eine sehr gute Sensitivität der Sensoreinrichtung, welche aber realisierbar ist.

Der die Dynamik der Koppelkräfte $F_X$, $F_Y$, $F_Z$ kennzeichnende Kennwert $K_{Dyn}$ wird bevorzugt als gemittelter RMS-Wert der dynamischen Anteile der Koppelkräfte $F_X$, $F_Y$, Fz bestimmt. Der RMS-Wert eines dynamischen Signals stellt einen Effektivwert der betreffenden Schwankungen und Schwingungen dar und kann als mittlere Amplitude des dynamischen Signals angesehen werden.

Die Zeitdauer der Sequenzen, in denen die dynamischen Anteile der Koppelkräfte $F_X$, $F_Y$, Fz ermittelt und ausgewertet werden, kann zwischen 5 und 90 Sekunden betragen.

Die möglichen Maßnahmen zur Erhöhung der Traktion des Solo-Fahrzeugs beziehungsweise des Zugfahrzeugs, welche weiter vorne bei der Erläuterung des Standes der Technik schon erwähnt wurden, können jeweils einzeln oder summativ automatisch ausgeführt werden, sobald anhand der Dynamik der Koppelkräfte $F_X$, $F_Y$, Fz eine gerade begonnene Geländefahrt erkannt worden ist.

Es ist aber auch möglich, dass die Maßnahmen zur Erhöhung der Traktion des Solo-Fahrzeugs beziehungsweise des Zugfahrzeugs dem Fahrer in einem Display eines Anzeige- und Bedienungsgerätes angezeigt werden, und dass zumindest eine dieser möglichen Maßnahmen erst nach einer Bestätigung durch den Fahrer ausgeführt wird.

Weiter kann vorgesehen sein, dass die Bestätigung zumindest einer der Maßnahmen durch den Fahrer durch das Drücken einer OK-Taste des Anzeige- und Bedienungsgerätes oder durch das Berühren eines OK-Tastfeldes in einem als Touchscreen ausgebildeten Display des Anzeige- und Bedienungsgerätes erfolgt.

Die Auswahl der auszuführenden Maßnahmen zur Erhöhung der Traktion kann beispielsweise auch durch das mehrmalige Drücken einer Scroll-Taste bis zu einer Markierung der jeweiligen Anzeige der Maßnahme und das anschließende Drücken der OK-Taste des Anzeige- und Bedienungsgerätes oder durch das Berühren eines Auswahltastfeldes an der Anzeige der Maßnahme in dem als Touchscreen ausgebildeten Display des Anzeige- und Bedienungsgerätes erfolgen.

Das erfindungsgemäße Verfahren wird nachstehend anhand eines in der beigefügten Zeichnung dargestellten Ausführungsbeispiels näher erläutert. **In** der Zeichnung zeigt

    Fig. 1 ein Blockschaltbild des Verfahrens zur Traktionssteuerung eines Fahrzeuggespanns,
    Fig. 2a ein erstes Fahrzeuggespann mit einem Zugfahrzeug und einem Anhängefahrzeug mit einer ersten Betriebsstellung einer Liftachse des Anhängefahrzeugs,
    Fig. 2b das erste Fahrzeuggespann gemäß Fig. 2a mit einer zweiten Betriebsstellung der Liftachse des Anhängefahrzeugs,
    Fig. 3a ein zweites Fahrzeuggespann mit einem Zugfahrzeug und einem Anhängefahrzeug mit einer ersten Betriebsstellung einer Liftachse des Anhängefahrzeugs,
    Fig. 3b das zweite Fahrzeuggespann gemäß Fig. 3a mit einer zweiten Betriebsstellung der Liftachse des Anhängefahrzeugs, und
    Fig. 4 ein als Traktor ausgebildetes nicht erfindungsgemäßes Solo-Fahrzeug mit einer an seiner Anhängevorrichtung befestigten separaten Koppelmasse.

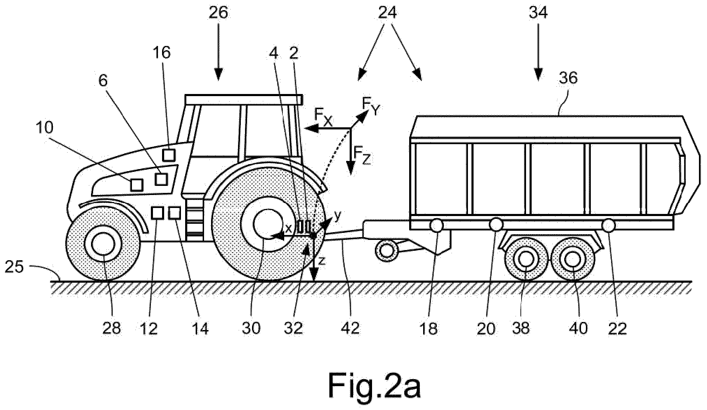

In Fig. 2a ist demnach ein erstes Fahrzeuggespann 24 abgebildet, welches aus einem Traktor als Zugfahrzeug 26 und einem an diesen angekoppelten Zentralachsanhänger als Anhängefahrzeug 34 gebildet ist. Das Zugfahrzeug 26 weist eine Vorderachse 28 sowie eine Hinterachse 30 mit Fahrzeugrädern auf und ist an seinem Heck mit einer nur schematisch angedeuteten Anhängevorrichtung 32 in Form einer Anhängekupplung ausgerüstet. Die Vorderachse 28 ist vorliegend beispielhaft als eine zuschaltbare Antriebsachse ausgebildet, wogegen die Hinterachse 30 als eine permanent angetriebene Antriebsachse ausgebildet ist. Die Anhängekupplung 32 kann als eine Kugelkopfkupplung, eine Maul-Bolzenkupplung oder eine Hakenkupplung ausgebildet sein. Das Anhängefahrzeug 34 ist mit einem Kipperaufbau 36 versehen, der zum Entladen zumindest nach hinten gekippt werden kann. Das Anhängefahrzeug 34 weist zudem zwei benachbart hintereinander angeordnete Zentralachsen 38, 40 mit Fahrzeugrädern auf. Die vordere erste Zentralachse 38 ist als eine Liftachse ausgebildet, welche bedarfsweise angehoben werden kann, wogegen die hintere zweite Zentralachse 40 starr am Rahmen des Anhängefahrzeugs 34 aufgehängt ist. An der Front des Anhängefahrzeugs 36 ist eine Deichsel 42 starr befestigt, welche über eine endseitige Gegenkupplung (in Fig. 2a nicht erkennbar) gelenkig mit der Anhängekupplung 32 des Zugfahrzeugs 26 verbunden ist. Die Gegenkupplung des Anhängefahrzeugs 34 ist an die Bauart der Anhängekupplung 32 des Zugfahrzeugs 26 angepasst und demzufolge als eine Kugelschalenkupplung oder als eine Zugöse ausgebildet.

In der Betriebsstellung gemäß Fig. 2a befindet sich die vordere Zentralachse 38 beziehungsweise Liftachse des Anhängefahrzeugs 34 in ihrer abgesenkten Normalstellung, in welcher das Gewicht des Anhängefahrzeugs 34 auf die beiden Zentralachsen 38, 40 verteilt und die auf die Anhängekupplung 32 des Zugfahrzeugs 26 übertragene Stützlast Fz relativ niedrig ist.

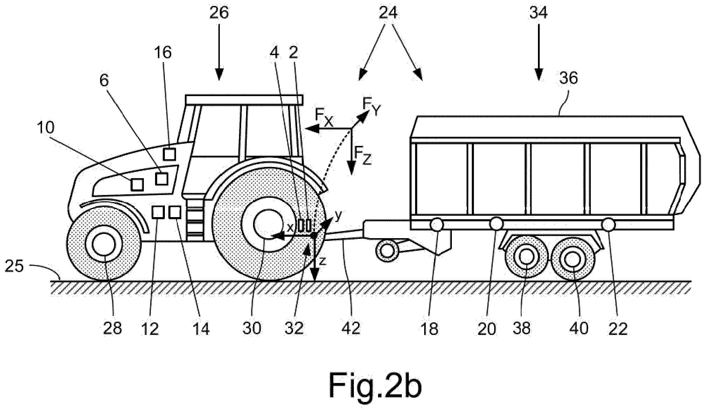

In der Betriebsstellung gemäß Fig. 2b befindet sich die vordere Zentralachse 38 des Anhängefahrzeugs 34 in ihrer angehobenen Funktionsstellung, in welcher das Gewicht des Anhängefahrzeugs 34 nur von der hinteren Zentralachse 40 getragen wird und die auf die Anhängekupplung 32 des Zugfahrzeugs 26 übertragene Stützlast Fz erhöht ist.

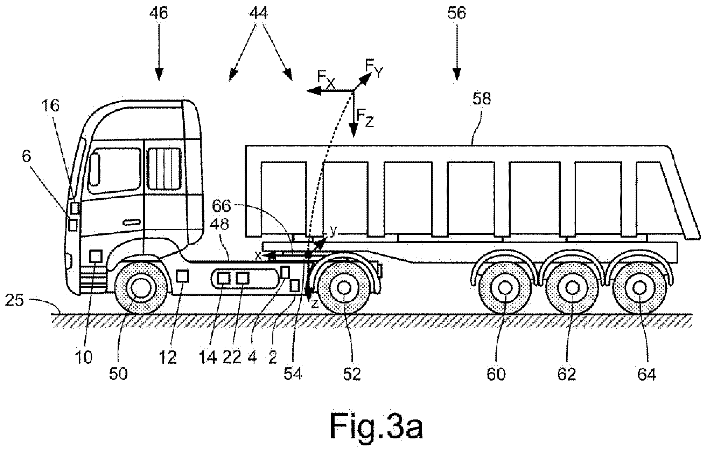

In Fig. 3a ist ein zweites Fahrzeuggespann 44 abgebildet, welches aus einer Sattelzugmaschine als Zugfahrzeug 46 und einem an diese angekoppelten Sattelauflieger als Anhängefahrzeug 56 gebildet ist. Das Zugfahrzeug 44 weist einen Fahrzeugrahmen 48, eine Vorderachse 50 und eine Hinterachse 52 mit Fahrzeugrädern auf und ist hinteren Bereich des Fahrzeugrahmens 48 mit einer Anhängevorrichtung 54 in Form einer Sattelkupplung ausgerüstet. Die Vorderachse 50 ist vorliegend beispielhaft als eine zuschaltbare Antriebsachse ausgebildet, wogegen die Hinterachse 52 als eine permanent angetriebene Antriebsachse ausgebildet ist. Das Anhängefahrzeug 56 ist mit einem Kipperaufbau 58 versehen, der zum Entladen zumindest nach hinten gekippt werden kann, und weist drei benachbart hintereinander angeordnete Aufliegerachsen 60, 62, 64 mit Fahrzeugrädern auf. Die vordere, erste Aufliegerachse 60 ist als eine Liftachse ausgebildet, welche bedarfsweise angehoben werden kann, wogegen die beiden hinteren Aufliegerachsen 62, 64 starr am Rahmen des Anhängefahrzeugs 56 aufgehängt sind. Im vorderen Bereich des Anhängefahrzeugs 56 ist eine Sattelplatte 66 mit einem Königszapfen (in Fig. 3a nicht erkennbar) angeordnet, die um eine Hochachse schwenkbar mit der Sattelkupplung 54 des Zugfahrzeugs 46 verbunden ist.

In der Betriebsstellung gemäß Fig. 3a befindet sich die Liftachse 60 des Anhängefahrzeugs 56 in ihrer abgesenkten Normalstellung, in welcher das Gewicht des Sattelaufliegers 56 auf die drei Aufliegerachsen 60, 62, 64 verteilt und die auf die Sattelkupplung 54 des Zugfahrzeugs 46 übertragene Stützlast Fz relativ niedrig ist.

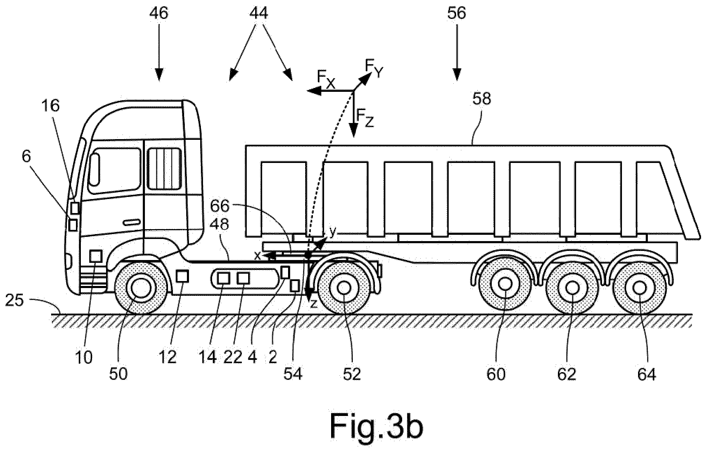

In der Betriebsstellung gemäß Fig. 3b befindet sich die Liftachse 60 dieses Anhängefahrzeugs 56 in ihrer angehobenen Funktionsstellung, in welcher das Gewicht des Sattelaufliegers 56 nur von den hinteren beiden Aufliegerachsen 62, 64 getragen wird und die auf die Sattelkupplung 54 des Zugfahrzeugs 46 übertragene Stützlast Fz erhöht ist.

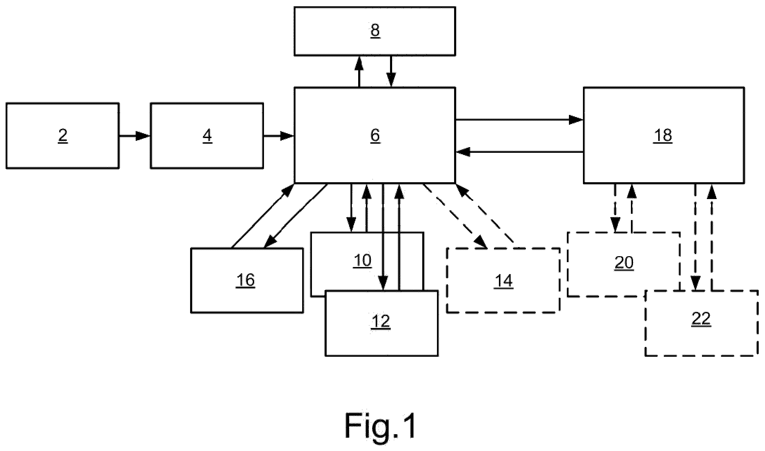

Nachfolgend wird anhand des in Fig. 1 abgebildeten Blockschaltbildes das erfindungsgemäße Verfahren zur Traktionssteuerung eines Fahrzeuggespanns 24, 44 der beschriebenen Art geschildert. An dem Koppelelement der Anhängevorrichtung 32, 54 des Zugfahrzeugs 26, 46 ist jeweils eine Sensoreinrichtung 2 angeordnet, mittels der in allen Fahrzeugrichtungen x, y, z jeweils eine von einem Gegenkoppelelement des Anhängefahrzeugs 34, 56 auf das Koppelelement des Zugfahrzeugs 26, 46 übertragene Koppelkraft $F_X$, $F_Y$, Fz als Kraftsignal erfasst, daraus in einer angeschlossenen Auswertungseinheit 4 die in der jeweiligen Fahrzeugrichtung x, y, z wirksame Koppelkraft $F_X$, $F_Y$, Fz bestimmt und an ein elektronisches Steuergerät 6 des Zugfahrzeugs 26, 46 übertragen werden kann.

Erfindungsgemäß ist vorgesehen, dass der von dem Fahrzeuggespann 24, 44 befahrene Untergrund anhand der Dynamik der Koppelkräfte $F_X$, $F_Y$, Fz bestimmt wird. Hierzu werden in der Auswertungseinheit 4 aus aufeinanderfolgenden Sequenzen der Koppelkräfte $F_X$, $F_Y$, Fz mit einer Zeitdauer zwischen 5 und 90 Sekunden jeweils die dynamischen Anteile ausgefiltert und aus diesen ein die Dynamik der Koppelkräfte $F_X$, $F_Y$, Fz kennzeichnender Kennwert $K_{Dyn}$ bestimmt und an das Steuergerät 6 des Zugfahrzeugs 26, 46 übertragen. In dem Steuergerät 6 wird der Kennwert $K_{Dyn}$ mit einem in einem zugeordneten Datenspeicher 8 abgespeicherten Grenzwert $K_{Dyn\_Gr}$ verglichen. Wenn der Kennwert $K_{Dyn}$ den Grenzwert $K_{Dyn\_Gr}$ überschritten hat ($K_{Dyn} > K_{Dyn\_Gr}$), wird mindestens eine Maßnahme zur Erhöhung der Traktion des Zugfahrzeugs 26, 46 durchgeführt. Wenn der Kennwert $K_{Dyn}$ den Grenzwert $K_{Dyn\_Gr}$ wieder unterschritten hat ($K_{Dyn} < K_{Dyn\_Gr}$), wird die mindestens eine Maßnahme zur Erhöhung der Traktion rückgängig gemacht.

Der die Dynamik der Koppelkräfte $F_X$, $F_Y$, $F_Z$ kennzeichnende Kennwert $K_{Dyn}$ wird bevorzugt als gemittelter RMS-Wert der dynamischen Anteile der Koppelkräfte $F_X$, $F_Y$, Fz bestimmt. Der RMS-Wert eines dynamischen Signals stellt einen Effektivwert der betreffenden Schwankungen und Schwingungen dar und kann als mittlere Amplitude des dynamischen Signals angesehen werden.

Vorliegend wird beispielhaft davon ausgegangen, dass das Zugfahrzeug 26, 46 und das Anhängefahrzeug 34, 56 jeweils mehrere Einrichtungen aufweisen, die zur Erhöhung der Traktion des Zugfahrzeugs 26, 46 genutzt werden können. Wie schon zuvor anhand der Figuren 2a bis 3b beschrieben wurde, kann die Vorderachse 28, 50 des Zugfahrzeugs 34, 56 jeweils als eine zuschaltbare Antriebsachse ausgebildet sein. Die Traktion des Zugfahrzeugs 26, 46 kann dann jeweils durch eine entsprechende Ansteuerung eines Getriebesteuergerätes 12 erhöht werden, mit der eine Schaltkupplung zur antriebswirksamen Zuschaltung der jeweiligen Vorderachse 28, 50 eingerückt wird. Ebenso wurde zuvor anhand der Figuren 2a bis 3b schon beschrieben, dass die Vorderachse 38, 60 der Anhängefahrzeuge 34, 56 jeweils als eine Liftachse ausgebildet sein kann. Die Traktion des Zugfahrzeugs 26, 46 kann dann jeweils durch eine entsprechende Ansteuerung eines Liftachssteuergerätes 20 von einem mit dem Steuergerät 6 des Zugfahrzeugs in Verbindung stehenden elektronischen Steuergerät 18 des Anhängefahrzeugs 34, 56 erhöht werden, mit welcher ein Hubaktuator zum Anheben der jeweiligen Liftachse 38, 40 eingeschaltet wird. Durch das Anheben der Liftachse 38, 40 wird die auf die Anhängevorrichtung 32, 54 des Zugfahrzeugs 26, 46 übertragene Stützlast Fz und damit die Achslast der benachbarten Antriebsachse 30, 52 des Zugfahrzeugs 26, 46 erhöht, welches zu einer verbesserten Traktion des Zugfahrzeugs 26, 46 führt. Dieselbe Wirkung könnte auch durch das Entlüften der betreffenden Federbälge erzielt werden, wenn die Vorderachsen 38, 60 der Anhängefahrzeuge 34, 56 anstelle einer Ausbildung als Liftachsen luftgefedert an dem jeweiligen Fahrzeugrahmen der Anhängefahrzeuge 34, 56 aufgehängt wären.

Eine weitere Möglichkeit zur Erhöhung der Traktion des Zugfahrzeugs 26, 46 besteht darin, den Reifenluftdruck der Fahrzeugräder aller Fahrzeugachsen 28, 30, 38, 40; 50, 52, 60, 62 64 bei Geländefahrt abzusenken, sofern das Zugfahrzeug 26, 46 und das Anhängefahrzeug 34, 56 jeweils mit einer Reifendruckregulierungsanlage ausgerüstet sind. Durch die Absenkung des Reifenluftdruckes, welche durch eine entsprechende Ansteuerung eines Reifendrucksteuergerätes 14 des Zugfahrzeugs 26, 46 und eines Reifendrucksteuergerätes 22 des Anhängefahrzeugs 34, 56 erfolgt, wird die Aufstandsfläche der Radreifen vergrößert, sodass die Fahrzeugräder weniger stark in den Boden einsinken. Hierdurch wird der Rollwiderstand des Fahrzeuggespanns 24, 44 reduziert und die Traktion des Zugfahrzeugs 26, 46 erhöht. Als positiver Nebeneffekt wird durch den geringeren Bodendruck der Fahrzeugräder der Acker-, Wiesen- oder Waldboden weniger stark verdichtet.

Zudem besteht zur Erhöhung der Traktion des Zugfahrzeugs 26, 46 und zur Vermeidung eines Festfahrens des Fahrzeuggespanns 24, 44 die Möglichkeit, die

Motorsteuerung des Antriebsmotors und die Getriebesteuerung des Fahrgetriebes des Zugfahrzeugs 26, 46 auf Kennlinien umzuschalten, die für den Offroad-Einsatz vorgesehen sind und eine höhere Motordrehzahl und Motorleistung des Antriebsmotors sowie eine größere Übersetzung des Fahrgetriebes bewirken. Die Umschaltung auf Kennlinien für den Offroad-Einsatz erfolgt durch eine entsprechende Ansteuerung eines Motorsteuergerätes 10 und des Getriebesteuergerätes 12.

Die möglichen Maßnahmen zur Erhöhung der Traktion des Zugfahrzeugs 26, 46 können automatisch ausgeführt werden, sobald anhand der Dynamik der Koppelkräfte $F_X$, $F_Y$, $F_Z$ eine gerade begonnene Geländefahrt erkannt worden ist.

Es ist aber auch möglich, dass die Maßnahmen zur Erhöhung der Traktion des Zugfahrzeugs 26, 46 dem Fahrer in einem Display eines an das Steuergerät 6 angeschlossenen Anzeige- und Bedienungsgerätes 16 angezeigt und erst nach einer Bestätigung durch den Fahrer ausgeführt werden. Die Bestätigung durch den Fahrer kann zum Beispiel durch das Drücken einer OK-Taste des Anzeige- und Bedienungsgerätes 16 oder durch das Berühren eines OK-Tastfeldes in einem als Touchscreen ausgebildeten Display des Anzeige- und Bedienungsgerätes 16 erfolgen.

Durchführbar ist es auch, dass nicht alle möglichen Maßnahmen zur Erhöhung der Traktion des Zugfahrzeugs 26, 46 ausgeführt werden, sondern dass der Fahrer aus den möglichen Maßnahmen zur Erhöhung der Traktion diejenigen auswählen kann, die ausgeführt werden sollen. Die Auswahl der auszuführenden Maßnahmen zur Erhöhung der Traktion kann beispielsweise durch das mehrmalige Drücken einer Scroll-Taste bis zu einer Markierung der jeweiligen Anzeige der Maßnahme und das anschließende Drücken der OK-Taste des Anzeige- und Bedienungsgerätes 16 oder durch das Berühren eines Auswahltastfeldes an der Anzeige der Maßnahme in dem als Touchscreen ausgebildeten Display des Anzeige- und Bedienungsgerätes 16 erfolgen.

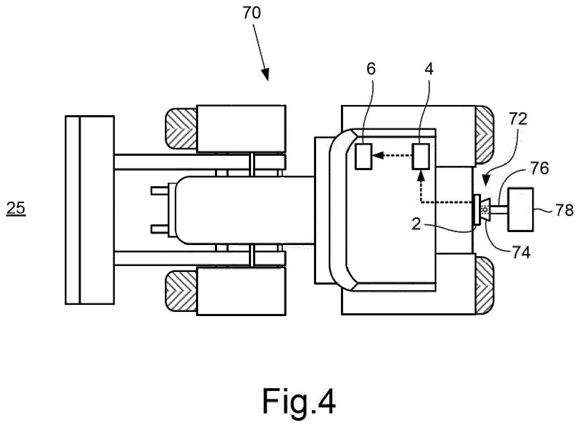

Die Fig. 4 zeigt ein als Traktor ausgebildetes nicht erfindungsgemäßes Fahrzeug 70, an dessen Heck eine Anhängevorrichtung 72 mit einem Koppelelement 74 in Form eines Kupplungsmauls angeordnet ist. Das Koppelelement 74 ist über die weiter oben ausführlich geschilderte Sensoreinrichtung 2 mit einer tragenden Struktur des Fahrzeugs 70 verbunden. Mit der Anhängevorrichtung 72 des Fahrzeugs 70 ist eine separate Koppelmasse 78 verbunden. Hierzu weist die separate Koppelmasse 78 ein Gegenkoppelelement 76 auf, welches in das Koppelelement 74 der Anhängevorrichtung 72 eingeführt und dort verriegelt ist. Bei einer Fahrt des Fahrzeugs 70 über einen Untergrund 25 mit unterschiedlichen Eigenschaften wird die Koppelmasse 78 wegen deren Massenträgheit in Bezug zum Fahrzeug 70 zu unterschiedlich starken Schwingungen angeregt, welche diesbezügliche Koppelkräfte in allen drei Raumrichtungen in die Anhängevorrichtung 72 einleiten. Dies wird von der Sensoreinrichtung 2 durch die Erzeugung von Messwerten sensiert. Diese Messwerte dienen anschließend, wie schon geschildert, zur fahrzeugseitigen Durchführung von Maßnahmen, welche eine für den jeweils befahrenen Untergrund 25 optimierte Fahrzeugtraktion bewirken. Diese Maßnahmen können wie oben geschildert automatisch oder manuell durch den Fahrer ausgewählt und ausgelöst werden.

Bezugszeichenliste (Teil der Beschreibung)

| | |
|---|---|
| 2 | Sensoreinrichtung |
| 4 | Auswertungseinheit |
| 6 | Elektronisches Steuergerät |
| 8 | Datenspeicher |
| 10 | Motorsteuergerät |
| 12 | Getriebesteuergerät |
| 14 | Reifendrucksteuergerät eines Zugfahrzeugs |
| 16 | Anzeige- und Bedienungsgerät |
| 18 | Elektronisches Steuergerät |
| 20 | Liftachssteuergerät |
| 22 | Reifendrucksteuergerät eines Anhängefahrzeugs |
| 24 | Erstes Fahrzeuggespann |
| 26 | Erstes Zugfahrzeug, Traktor |
| 28 | Vorderachse, Antriebsachse (zuschaltbar) |
| 30 | Hinterachse, Antriebsachse |
| 32 | Anhängevorrichtung, Anhängekupplung |
| 34 | Erstes Anhängefahrzeug, Zentralachsanhänger |
| 36 | Kipperaufbau des Anhängefahrzeug 34 |
| 38 | Erste Zentralachse, Liftachse |
| 40 | Zweite Zentralachse |
| 42 | Deichsel (mit Gegenkupplung) |
| 44 | Zweites Fahrzeuggespann |
| 46 | Zweites Zugfahrzeug, Sattelzugmaschine |
| 48 | Fahrzeugrahmen |

| | |
|---|---|
| 50 | Vorderachse, Antriebsachse (zuschaltbar) |
| 52 | Hinterachse, Antriebsachse |
| 54 | Anhängevorrichtung, Sattelkupplung |
| 56 | Zweites Anhängefahrzeug, Sattelauflieger |
| 58 | Kipperaufbau des Anhängefahrzeug 56 |
| 60 | Erste Aufliegerachse, Liftachse |
| 62 | Zweite Aufliegerachse |
| 64 | Dritte Aufliegerachse |
| 66 | Sattelplatte (mit nicht sichtbaren Königszapfen) |
| 70 | Fahrzeug, Traktor, Solo-Fahrzeug |
| 72 | Anhängevorrichtung am Solo-Fahrzeug 70 |
| 74 | Koppelelement der Anhängevorrichtung 72 |
| 76 | Gegenkoppelelement |
| 78 | Koppelmasse mit Gegenkoppelelement 75 |
| $F_X$ | Koppelkraft in x-Richtung |
| $F_Y$ | Koppelkraft in y-Richtung |
| Fz | Koppelkraft in z-Richtung, Stützlast |
| $K_{Dyn}$ | Kennwert |
| $K_{Dyn\_Gr}$ | Grenzwert |
| x | Fahrzeuglängsrichtung |
| y | Fahrzeugquerrichtung |
| z | Fahrzeugvertikalrichtung |

## Patentansprüche

1. Verfahren zur Traktionssteuerung eines Fahrzeuggespanns (24, 44), welches ein Zugfahrzeug (26, 46) sowie wenigstens ein an dieses angekoppeltes Anhängefahrzeug (34, 56) umfasst, wobei das Zugfahrzeug (26, 46) mit einer an einem Koppelelement einer Anhängevorrichtung (32, 54) angeordneten Sensoreinrichtung (2) versehen ist, wobei mittels der Sensoreinrichtung (2) in allen Fahrzeugrichtungen x, y, z jeweils eine von einem Gegenkoppelelement des Anhängefahrzeugs (34, 56) auf das Koppelelement des Zugfahrzeugs (26, 46) übertragene Koppelkraft $F_X$, $F_Y$, Fz gemessen und als Kraftsignal ausgegeben wird, wobei aus diesen Kraftsignalen in einer an die Sensoreinrichtung (2) angeschlossenen Auswertungseinheit (4) die in der jeweiligen Fahrzeugrichtung x, y, z wirksame Koppelkraft $F_X$, $F_Y$, Fz bestimmt sowie an ein elektronisches Steuergerät (6) des Zugfahrzeugs (26, 46) übertragen wird, und wobei die Traktion des Zugfahrzeugs (26, 46) mittels des Steuergeräts (6) an die Eigenschaften des Untergrunds (25) angepasst wird, **dadurch gekennzeichnet, dass** Eigenschaften des befahrenen Untergrunds (25) anhand der Dynamik der Koppelkräfte $F_X$, $F_Y$, $F_Z$ bestimmt werden, und zwar derart, dass in der Auswertungseinheit (4) aus aufeinanderfolgenden Sequenzen der Koppelkräfte $F_X$, $F_Y$, Fz jeweils die dynamischen Anteile herausgefiltert werden, dass aus diesen dynamischen Anteilen der Koppelkräfte $F_X$, $F_Y$, $F_Z$ ein die Dynamik der Koppelkräfte $F_X$, $F_Y$, $F_Z$ kennzeichnender Kennwert $K_{Dyn}$ bestimmt und an das Steuergerät (6) übertragen wird, dass in dem Steuergerät (6) der Kennwert $K_{Dyn}$ mit einem abgespeicherten Grenzwert $K_{Dyn\_Gr}$ verglichen wird, dass mindestens eine Maßnahme zur Erhöhung der Traktion des Zugfahrzeugs (26, 46) durchgeführt wird, wenn der Kennwert $K_{Dyn}$ den Grenzwert $K_{Dyn\_Gr}$ überschritten hat ($K_{Dyn}$ > $K_{Dyn\_Gr}$), und dass die mindestens eine Maßnahme zur Erhöhung der Traktion rückgängig gemacht wird, wenn der Kennwert $K_{Dyn}$ den Grenzwert $K_{Dyn\_Gr}$ wieder unterschritten hat ($K_{Dyn}$ < $K_{Dyn\_Gr}$).

2. Verfahren nach Anspruch 1, **dadurch gekennzeichnet, dass** der die Dynamik der Koppelkräfte $F_X$, $F_Y$, Fz kennzeichnende Kennwert $K_{Dyn}$ als gemittelter RMS-Wert der dynamischen Anteile der Koppelkräfte $F_X$, $F_Y$, Fz bestimmt wird.

3. Verfahren nach einem der Ansprüche 1 bis 2, **dadurch gekennzeichnet, dass** die Zeitdauer der Sequenzen, in denen die dynamischen Anteile der Koppelkräfte $F_X$, $F_Y$, Fz ermittelt und ausgewertet werden, zwischen 5 und 90 Sekunden beträgt.

4. Verfahren nach einem der Ansprüche 1 bis 3, **dadurch gekennzeichnet, dass** dann, wenn ein Untergrund (25) festgestellt wurde, welcher außerhalb einer Straße oder eines befestigten Weges anzutreffen ist, zur Erhöhung der Traktion des Fahrzeugs (70) oder des Zugfahrzeugs (26, 46) und zur Vermeidung eines Festfahrens des Fahrzeuggespanns (24, 44) die Motorsteuerung des Antriebsmotors und die Getriebesteuerung des Fahrgetriebes des Fahrzeugs (70) oder des Zugfahrzeugs (26, 46) auf Kennlinien umgeschaltet wird, welche für den Offroad-Einsatz vorgesehen sind und eine höhere Motordrehzahl sowie Motorleistung des Antriebsmotors und eine größere Übersetzung des Fahrgetriebes bewirken.

5. Verfahren nach einem der Ansprüche 1 bis 4, **dadurch gekennzeichnet, dass** die möglichen Maßnahmen zur Erhöhung der Traktion des Fahrzeugs (70) oder des Zugfahrzeugs (26, 46) dem Fahrer in einem Display eines Anzeige- und Bedienungsgerätes (16) angezeigt werden, und dass zumindest eine dieser Maßnahmen erst nach einer Bestätigung durch den Fahrer ausgeführt wird.

6. Verfahren nach einem der Ansprüche 1 bis 5, **dadurch gekennzeichnet, dass** die Bestätigung zumindest einer der Maßnahmen durch den Fahrer durch das Drücken einer OK-Taste des Anzeige- und Bedienungsgerätes (16) oder durch das Berühren eines OK-Tastfeldes in einem als Touchscreen ausgebildeten Display des Anzeige- und Bedienungsgerätes (16) erfolgt.

**Claims**

1. Method for traction control of a vehicle combination (24, 44), which comprises a tractor vehicle (26, 46) and at least one trailer vehicle (34, 56) coupled to this tractor vehicle, wherein the tractor vehicle (26, 46) is provided with a sensor device (2) arranged on a coupling element of a trailer device (32, 54), wherein a coupling force Fx, Fy, Fz transmitted by a mating coupling element of the trailer vehicle (34, 56) to the coupling element of the tractor vehicle (26, 46) is measured by means of the sensor device (2) in all vehicle directions x, y, z in each case and output as a force signal, wherein the coupling force Fx, Fy, Fz acting in the respective vehicle direction x, y, z is determined from these force signals in an evaluation unit (4) connected to the sensor device (2) and is transmitted to an electronic control device (6) of the tractor vehicle (26, 46), and wherein the traction of the tractor vehicle (26, 46) is adapted to the properties of the ground surface (25) by means of the control device (6), **characterized in that** properties of the ground surface (25) being driven on are determined on the basis of the dynamics of the coupling forces Fx, Fy, Fz, specifically in such a way that the dynamic components are each filtered out from successive sequences of the coupling forces Fx, Fy, Fz in the evaluation unit (4), **in that** a characteristic value $K_{Dyn}$, which characterizes the dynamics of the coupling forces Fx, Fy, Fz, is determined from these dynamic components of the coupling forces Fx, Fy, Fz and transmitted to the control device (6), **in that** the characteristic value $K_{Dyn}$ is compared with a stored limit value $K_{Dyn\_Gr}$ in the control device (6), **in that** at least one measure for increasing the traction of the tractor vehicle (26, 46) is carried out if the characteristic value $K_{Dyn}$ has exceeded the limit value $K_{Dyn\_Gr}$ ($K_{Dyn} > K_{Dyn\_Gr}$), and **in that** the at least one measure for increasing the traction is reversed if the characteristic value $K_{Dyn}$ has again fallen below the limit value $K_{Dyn\_Gr}$ ($K_{Dyn} < K_{Dyn\_Gr}$).

2. Method according to Claim 1, **characterized in that** the characteristic value $K_{Dyn}$, which characterizes the dynamics of the coupling forces Fx, Fy, Fz, is determined as the average RMS value of the dynamic components of the coupling forces Fx, Fy, Fz.

3. Method according to either of Claims 1 and 2, **characterized in that** the duration of the sequences in which the dynamic components of the coupling forces Fx, Fy, Fz are ascertained and evaluated is between 5 and 90 seconds.

4. Method according to any of Claims 1 to 3, **characterized in that**, when a ground surface (25) that is off-road or away from a paved path has been identified, the motor controller of the drive motor and the transmission controller of the transmission of the vehicle (70) or of the tractor vehicle (26, 46) are switched over to characteristic maps that are intended for off-road use and result in a higher motor speed and motor power of the drive motor and a greater transmission ratio of the transmission in order to increase the traction of the vehicle (70) or of the tractor vehicle (26, 46) and prevent the vehicle combination (24, 44) from becoming stuck.

5. Method according to any of Claims 1 to 4, **characterized in that** the possible measures for increasing the traction of the vehicle (70) or of the tractor vehicle (26, 46) are displayed to the driver in a display of a display and operating device (16), and **in that** at least one of these measures is carried out only after confirmation by the driver.

6. Method according to any of Claims 1 to 5, **characterized in that** confirmation of at least one of the measures by the driver is performed by pressing an OK button of the display and operating device (16) or by touching an OK touch area in a display of the display and operating device (16) in the form of a touchscreen.

**Revendications**

1. Procédé de commande de traction d'un ensemble attelé (24, 44), qui comprend un véhicule tracteur (26, 46) ainsi qu'au moins un véhicule tracté (2, 56) accouplé à celui-ci, le véhicule tracteur (26, 46) étant pourvu d'un dispositif de détection (34) disposé sur un élément d'accouplement d'un dispositif d'attelage (2, 54), une force d'accouplement Fx, Fy, Fz transmise par un élément d'accouplement complémentaire du véhicule tracté (34, 56) à l'élément d'accouplement du véhicule tracteur (4, 46) étant, au moyen du dispositif de détection (32), mesurée dans toutes les directions x, y, z du véhicule et délivrée en tant que signal de force, la force d'accouplement Fx, Fy, Fz agissant dans la direction respective x, y, z du véhicule étant déterminée à partir de ces signaux de force dans une unité d'évaluation (26) reliée au dispositif de détection (2) et étant transmise à un appareil de commande électronique (6) du véhicule tracteur (26, 46), et la traction du véhicule tracteur (26, 46) étant adaptée aux propriétés du sol (25) au moyen de l'appareil de commande (6), **caractérisé en ce que** les propriété du sol (25) sont déterminées sur la base de la dynamique des forces d'accouplement Fx, Fy, Fz, de telle manière que les composantes dynamiques soient respectivement éliminées, dans l'unité d'évaluation (4), par filtrage de séquences successives des forces d'accouplement Fx, Fy, Fz, et qu'une valeur caractéristique $K_{Dyn}$ caractérisant la dynamique des forces d'accouplement Fx, Fy, Fz soit déterminée à partir de ces composantes dynamiques des forces d'accouplement Fx, Fy, Fz, et soit transmise à l'appareil de commande (6), **en ce que**, dans l'appareil de commande (6), la valeur caractéristique $K_{Dyn}$ est comparée à une valeur limite $K_{Dyn\_Gr}$ mémorisée, **en ce qu'**au moins une action d'augmentation de la traction du véhicule tracteur (26, 46) est effectuée lorsque la valeur caractéristique $K_{Dyn}$ a dépassé la valeur limite $K_{Dyn\_Gr}$ ($K_{Dyn} > K_{Dyn\_Gr}$), et **en ce que** ladite au moins une action d'augmentation de la traction est annulée lorsque la valeur caractéristique $K_{DYN}$ s'est de nouveau abaissée en dessous de la valeur limite ($K_{Dyn} < K_{Dyn\_Gr}$).

2. Procédé selon la revendication 1, **caractérisé en ce que** la valeur caractéristique $K_{Dyn}$ caractérisant la dynamique des forces d'accouplement Fx, Fy, Fz est déterminée en tant que valeur RMS moyennée des composantes dynamiques des forces d'accouplement Fx, Fy, Fz.

3. Procédé selon l'une quelconque des revendications 1 à 2, **caractérisé en ce que** la durée des séquences dans lesquelles les composantes dynamiques des forces d'accouplement Fx, Fy, Fz sont déterminées et évaluées est comprise entre 5 et 90 secondes.

4. Procédé selon l'une quelconque des revendications 1 à 3, **caractérisé en ce que**, lorsqu'un sol (25), situé en dehors d'une route ou d'un chemin stabilisé, a été déterminé, pour augmenter la traction du véhicule (70) ou du véhicule tracteur (26, 46) et pour éviter un enlisement de l'attelage (24, 44), la commande de moteur appliquée au moteur d'entraînement et la commande de transmission de la transmission de traction du véhicule (70) ou du véhicule tracteur (26, 46) sont amenées à basculer sur des courbes caractéristiques prévues pour l'utilisation hors route et provoquant un régime moteur ainsi qu'une puissance moteur plus élevés du moteur d'entraînement et un rapport de démultiplication plus élevé de la transmission.

5. Procédé selon l'une quelconque des revendications 1 à 4, **caractérisé en ce que** les actions possibles d'augmentation de la traction du véhicule (70) ou du véhicule tracteur (26, 46) sont présentées au conducteur sur un dispositif d'affichage d'un appareil d'affichage et de commande (16), et **en ce qu'**au moins l'une de ces actions n'est effectuée qu'après une confirmation par le conducteur.

6. Procédé selon l'une quelconque des revendications 1 à 5, **caractérisé en ce que** la confirmation d'au moins l'une des actions par le conducteur est effectuée par appui sur un bouton OK de l'appareil d'affichage et de commande (16) ou en touchant un champ tactile OK sur un dispositif d'affichage de l'appareil d'affichage et de commande (16) réalisé sous forme d'écran tactile.

Fig.1

Fig.2a

Fig.2b

Fig.3a

Fig.3b

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018106856 A1
- DE 102019124281 A1
- US 2020102009 A1
- DE 102007028277 A1
- DE 102016208792 A1
- DE 102008054044 A1
- DE 102004010561 A1
- DE 202011051292 U1
- DE 102019210325 A1
- DE 69718290 T2